# EUROPÄISCHE PATENTSCHRIFT

(11) **EP 0 565 887 B1**
(45) Veröffentlichungstag und Bekanntmachung des Hinweises auf die Patenterteilung: **23.12.1998**
(21) Anmeldenummer: 93104317.8
(22) Anmeldetag: 17.03.1993
(51) Int. Cl.: A23G 1/10, A23G 1/18, A23G 1/04, A23G 1/06, A23G 1/12

(54) **Maschine zum Bearbeiten von Schokolademassen und Verwendung zur Herstellung von Crumb**
Apparatus for working of chocolate masses and its use for making crumbs
Machine pour travailler des masses de chocolat et son application à la fabrication de crumbs

(30) Priorität: 14.04.1992 CH 1230/92
(43) Veröffentlichungstag der Anmeldung: 20.10.1993
(73) Patentinhaber: R. FRISSE GmbH, 32107 Bad Salzuflen (DE)
(72) Erfinder: Schulte, Manfred, W-4904 Enger (DE); Hartsieker, Martin, W-4970 Bad Oeynhausen (DE); Mechias, Bernd, Dr., W-3300 Braunschweig (DE); Müntener, Kurt, W-4902 Bad Salzuflen (DE)
(74) Vertreter: Révy von Belvárd, Peter

(56) Entgegenhaltungen:
- EP-A- 0 518 025
- DE-A- 1 782 585
- DE-B- 1 073 285
- DE-C- 654 877
- FR-A- 2 527 938
- US-A- 2 063 067

## Beschreibung

Die Erfindung betrifft eine Vorrichtung nach dem Oberbegriffe des Anspruches 1 sowie auf ein Verfahren nach dem Oberbegriff des Anspruches 10.

Bearbeitungsmaschinen zum Mischen sind verschiedentlich bekannt und z.B. in der DE-OS 17 82 585 und auch der DE-PS 964 131 beschrieben.

Ein Problem bei der Bearbeitung von Schokolademassen kann sich dann ergeben, wenn in die Masse auch Feststoffe eingerührt werden sollen, beispielsweise Nüsse. Dasselbe Problem kann sich dann ergeben, wenn die Masse etwa selbst durch Agglomeration harte, knollenartige Bestandteile gebildet haben sollte. Es hat sich erwiesen, daß dann der Umdrehungszahl der Bearbeitungswelle, die bis zu einem gewissen Grade auch die Bearbeitungsleistung der Vorrichtung bestimmt, besonders in einem solchen Falle Grenzen gesetzt sind. Zuweilen kann sich dabei auch eine Ansammlung der einzurührenden Feststoffe oder Agglomerate an der Trogwand ergeben, so daß die Homogenität nicht mehr vollständig gewährleistet sein mag. Bisher hat man diese Erscheinung in Kauf genommen und allenfalls zum Hilfsmittel einer Verminderung der Umdrehungszahl der Bearbeitungswelle gegriffen.

Der Erfindung liegt daher die Aufgabe zugrunde, die Leistung einer solchen Vorrichtung möglichst hoch zu halten und dabei dennoch eine hohe Homogenität sicherzustellen. Erfindungsgemäß erfolgt dies durch die kennzeichnenden Merkmale des Anspruches 1.

Ein erster Schritt zur erfindungsgemässen Lösung liegt in der Erkenntnis, daß die natürliche Grenze der Leistungsfähigkeit gerade durch die von den Bearbeitungswerkzeugen und ihrer Welle ausgeübte Zentrifugalkraft ist, die natürlich umso höher wird, je größer die Umdrehungszahl ist. Anderseits wirkt diese Zentrifugalkraft natürlich besonders auf die eine höhere Dichte aufweisenden Feststoffe oder Agglomerate, so daß es letztlich, statt zu der erwünschten Homogenisierung, gegebenenfalls sogar zu einer Entmischung kommen kann.

Wenn aber, in einem zweiten erfinderischen Schritt, die kennzeichnenden Merkmale des Anspruches 1 verwirklicht werden und das Material durch die Förderwendel von der Trogwand weg gefördert wird, gelangt es wieder in den Bereich der Bearbeitungswerkzeuge bzw. wird der ungünstigen Wirkung der Zentrifugalkraft entgegengewirkt.

Besonders günstig ist die Ausbildung nach Anspruch 2, denn dadurch werden die Feststoffe hinsichtlich ihrer Grösse reduziert, was der gesuchten Homogenität förderlich ist. Dazu ist es auch noch von Vorteil, daß auf diese Weise das Zerschneiden und Fördern ohne zusätzlichen Energieaufwand und ohne zusätzliche Einbauten, d.h. also auch preisgünstig, gleichzeitig erfolgen kann.

Besonders bevorzugt ist eine Ausbildung nach Anspruch 3, weil so ein einziges Element das Schneiden und das Fördern besorgt.

Bei einer Ausbildung nach Anspruch 4 ergeben sich zwischen den einzelnen Sektoren Zwischenräume, die die Mischwirkung einerseits unterstützen, anderseits zusätzliche Kanten schaffen, die die Zerkleinerungswirkung verbessern. Dies ist insbesondere bei einer Ausbildung nach Anspruch 5 der Fall.

Bevorzugt wird ein Messer nach Anspruch 7 verwendet. Mit einem solchen Messer kann eine mehrfache Zerkleinerungswirkung erzielt werden, da einerseits die wendelförmige Schneide wirkt, anderseits die Kanten für größere Stücke (z.B. Haselnüsse) eine Schlagwirkung ausüben. Wendelförmige Schneiden sind alleine für Rasenmäher an sich bekannt, beispielsweise durch die US-A-2,063,067, doch liegt einerseits die Übertragung solcher Messer auf die Anwendung für Conchen wohl nicht nahe, zumal sie in letzterem Falle auch noch eine Förderwirkung auszuüben haben, die ja bei Rasenmähern gerade nicht erwünscht ist, anderseits ergibt sich aber mit den zusätzlichen Kanten noch ein synergetischer Effekt.

Crumb ist eine Masse, die aus einer besonderen Art der Schokoladeherstellung resultiert. Im Zuge dieses Verfahrens entwikkelt sich diese Masse zu dem sog. Toffee, das äußerst schwer zu bearbeiten ist. Nun hat sich aber gezeigt, sich eine wesentliche Erleichterung ergibt, wenn man nach Anspruch 9 vorgeht.

Einzelheiten und Merkmale der Erfindung werden im folgenden an Hand der Zeichnungen näher erläutert. Dabei zeigen die
- Fig. 1: eine Anlage mit zwei Rühr- und Knetwerken, die sich auf parallelen Achsen befinden, und zwei Förder- und Schneidschnecken;
- Fig. 2: die Ausbildung einer solchen Schnecke in vergrößertem Maßstab, teilweise im Schnitt;
- Fig. 3: eine Stirnansicht auf eines der Schneckenelemente;
- Fig. 4: eine Seitenansicht von zwei aneinander befestigten Grundelementen im eingebauten Zustand; und
- Fig. 5: eine weitere erfindungsgemäß Ausführungsform in Seitenansicht und im Zusammenwirken mit gelochten Paddelwerkzeugen.

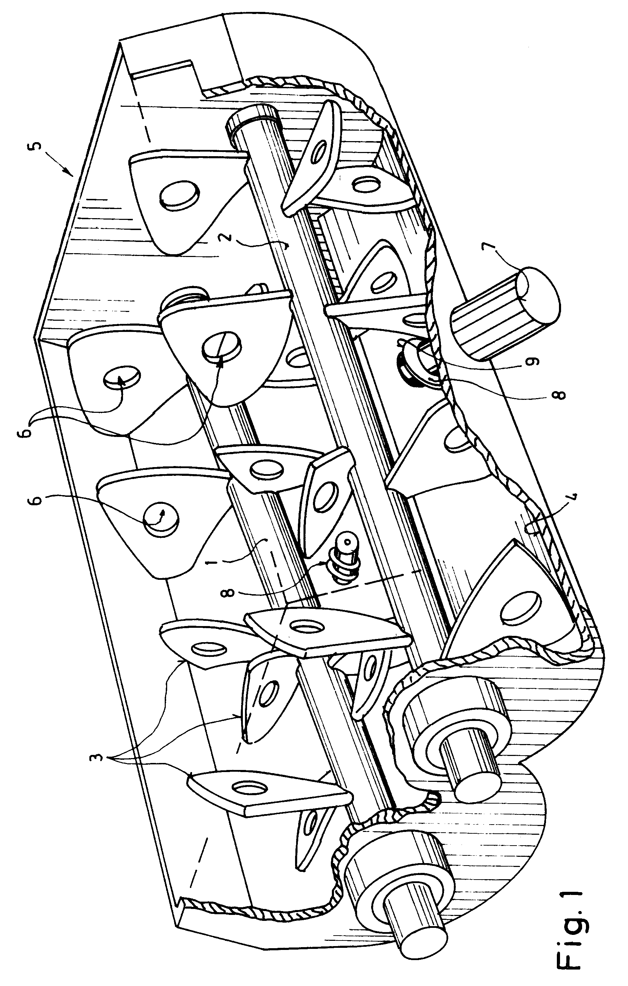

In der Fig. 1 ist ein Ausführungsbeispiele nach der Erfindung dargestellt. Von zueinander parallelen Bearbeitungswellen 1, 2, radial abstehende, paddelartige Mischflügel 3 ergeben an zylinderförmigen, zu den Wellen 1, 2 koaxialen Innenwänden 4 eines Mischtroges 5 einen gegenläufigen Masseschub, der sich jeweils an den in verschiedenen Richtungen bzw. unter unterschiedlichen Winkeln angeordneten Nachbarwerkzeugen 3 bricht. Abwechselndes Drücken und gleichzeitiges Scheren der rotierenden Mischflügel bewirkt Kneteffekt, welcher für die Versalbung der Feststoffteilchen in der Fettphase sorgt. Die Mischflügelflächen bewegen sich also aufeinander zu und wieder voneinander weg. Die dazwischen befindlichen Massen werden dabei gepreßt und gewirkt. Der Druck setzt das Fließen der Partikel in der Fettphase in Gang, wozu Durchbrechungen 6 in den Paddeln 3 besonders dienlich sind. Gleichzeitig werden auch größere Partikel, die sich in der Masse befinden, durch den eingeschränkten Bewegungsfreiraum, der das Massenträgheitsmoment zusätzlich beeinflusst, in einem beschränkten Umfang zerkleinert.

Nun hat sich gezeigt, dass grössere Einschlüsse bzw. Festkörper durch die Zentrifugalbeschleunigung sich in Richtung Außenwand 4 bewegen. Erfindungsgemäß werden diese Teile durch spezielle Förderwendeln wieder in den Kreislauf des zu knetenden Gutes eingebracht, wobei die Wendel an sich auch paddelartig ausgebildet sein könnte. Bevorzugt ist jedoch, wenn sie gleichzeitig durch integrierte Schneidkanten zerkleinert werden. Eine Kombination dieser beiden Werkzeugarten findet sich in Fig. 1, wo je ein Antriebsmotor 7 (nur einer ist sichtbar) einen Schneckenkörper 8 in einer derartigen Richtung dreht, daß das Gut von der Wandung 4 weg, zweckmäßig radial einwärts, gefördert wird. Dabei weist die Schnecke 8 vorteilhaft an ihrer radial äußeren Seite eine Schneidkante 9 auf.

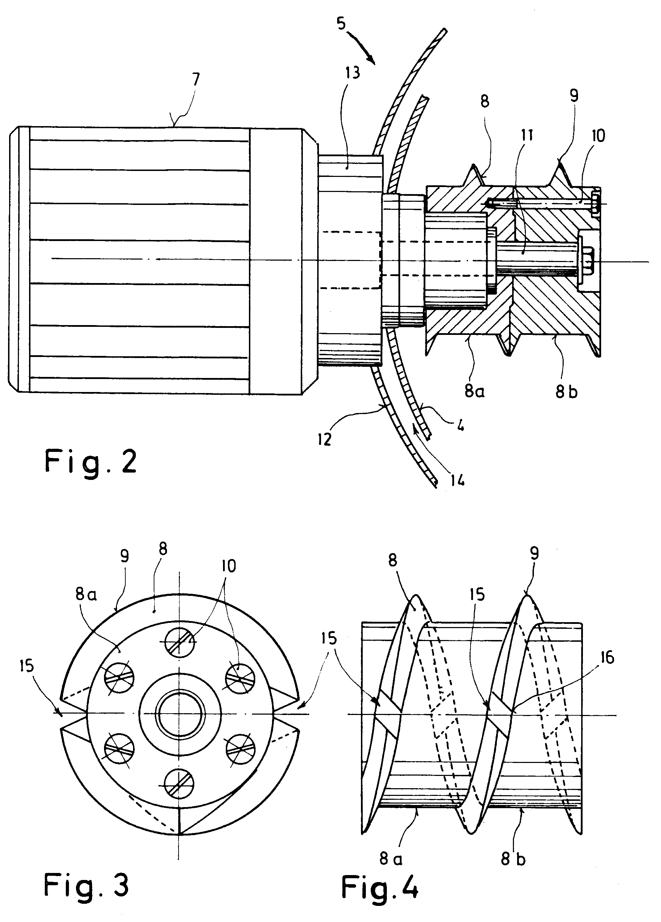

Die Schnecken 8 ragen, wie aus Fig. 1 ersichtlich, schräg aufwärts, um so eine aufwärts fördernde Bewegungskomponente zu erzielen. Man darf ja nicht vergessen, daß auf in der Schokolademasse enthaltene Festkörper und Agglomerate nicht nur die Zentrifugalkraft auf Grund der Drehung der Wellen 1, 2 einwirkt, sondern selbstverständlich auch die Schwerkraft, weshalb eine gewisse Tendenz dieser Teile größerer Masse dazu besteht, sich eher am Boden abzusetzen. Dem wirken die aufwärts fördernden Schnecken 8 entgegen. Dabei könnten die Schnecken 8 an sich auch vertikal nach oben ragen, indem sie beispielsweise in einer vertikalen Ebene mit der jeweiligen Bearbeitungswelle 1 bzw. 2 angeordnet werden. Allerdings würde eine solche Anordnung die Gesamtbauhöhe der Vorrichtung vergrößern, weshalb die Unterbringung der Motoren 7, zufolge der Schräglage der Schnecken 8, in den vom, außen zweckmäßig zylindrischen, Trog 5 gebildeten Zwickeln bevorzugt ist. Es versteht sich aber, daß solche Zwickel auch dann entstehen können, wenn die Außenwand des Troges beispielsweise nur, z.B. unter 45°, abgeschrägt wäre. Die in Fig. 1 dargestellte, parallel zur Innenwand 4 verlaufende äußere Rundung ergibt aber, wie aus Fig. 2 ersichtlich, einen gleichmäßig breiten Temperierraum 14. Aus dieser Fig. 2 ist auch ersichtlich, dass die Ausrichtung der Schnecken 8 auch horizontal verlaufen könnte, was aber aus den erwähnten Gründen nicht bevorzugt ist, zumal sich dann eine größere Gesamtbreite der Vorrichtung ergibt.

In vorteilhafter Weise werden diese Schnecken aus einzelnen Grundelementen modulartig zusammengesetzt, deren Schneidkantenform den zu bearbeitenden Produkten angepaßt werden kann, wie besonders aus den Fig. 2 bis 4 zu entnehmen ist. Darin ist beispielshalber die Aneinanderreihung zweier Schneckenelemente 8a, 8b gezeigt, die gleichartig ausgebildet sind und einander ergänzen. Wie aus Fig. 2 ersichtlich, erfolgt der Zusammenbau beispielsweise mittels durchgehender Schrauben 10, doch ist auch jede andere, bei Extrudern an sich bekannte Bauweise möglich.

Diese Schnecke 8 sitzt an einer Motorwelle 11, deren Motor 7 an der äußeren Trogwand 12 des Troges 5 dicht befestigt, beispielsweise über einen Flansch 13 angeschweißt, ist. Es ist bevorzugt, wenn die beiden Trogwände 4, 12 zur Bildung eines Temperierraumes 14 in einem Abstande voneinander gehalten sind, so dass ein Temperiermittel (Kalt- oder Heißwasser) in den Raum 14 eingelassen werden kann.

Gemäss Fig. 3 und 4 entspricht es einer bevorzugten Ausführungsform, wenn die Schnecke 8 sich sektorartig nur über einen Teil des Umfanges des jeweiligen Schneckenelementes 8a erstreckt. Dadurch ergeben sich einerseits für die Durchmischung günstige Auslaßzwischenräume 15, anderseits verbessert sich auf diese Weise auch die Schneidwirkung. Dies ist besonders dann der Fall, wenn die sich radial erstreckenden Seitenkanten 16 nicht parallel zur Achse der Elemente 8a, 8b geführt sind (was auch möglich wäre), sondern derart schräg, dass sich ein spitzer Winkel an diesen Kanten 16 ergibt und diese somit als Schneidkanten ausgebildet sind. Im Falle der Fig. 1 bis 4 beträgt der Sektorwinkel der Schneide 9 180°.

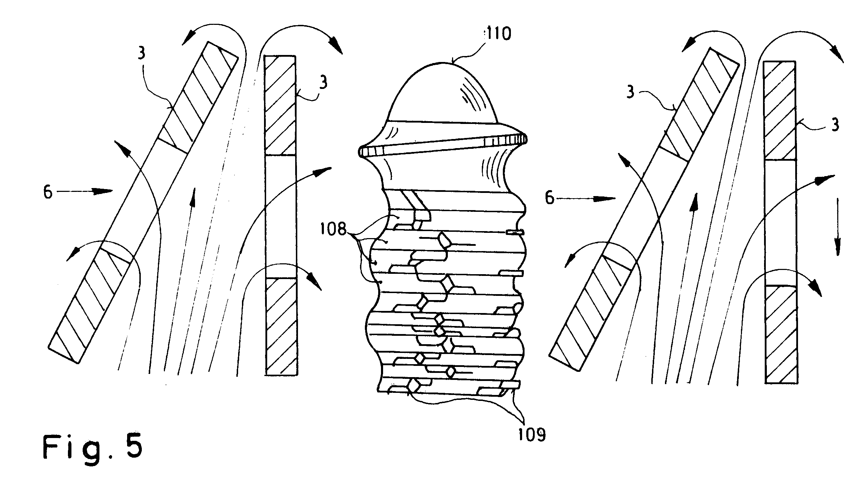

Eine andere Ausführung veranschaulicht die Fig. 5, bei der die Schnecke durch einzelne scheibenförmige Schneckenelemente 108 gebildet wird, auf denen sektorförmige, leicht Z-förmig versetzte Schneiden 109 aufgesetzt oder als selbständige Elemente zwischen den Scheiben 108 eingesetzt sind. Eine einzige, mit einem gewölbten Kopfe versehene Spannschraube 110 kann das Paket von Scheiben 108 zusammenhalten.

An Hand der Fig. 5 wird aber auch das Zusammenwirken mit Durchbrechungen aufweisenden Paddelwerkzeugen veranschaulicht. Durch deren Durchbrechungen wird nämlich nicht nur der Versalbungsvorgang begünstigt, sondern gleichzeitig auch das Material gegen die Schneiden 109 gelenkt, während gleichzeitig das Material von dem Schneckenkörper aus den Scheiben 108 erfasst und teilweise radial einwärts geführt, teilweise an die jeweils benachbarten Paddelwerkzeuge 3 abgegeben wird. Auf diese Weise erhält man einen synergetischen Effekt.

Wenn in diesem Zusammenhange von der Versalbungswirkung die Rede ist, so sei hier erwähnt, dass die Wellen 1 und 2 in einem bevorzugten Falle nicht nur mit den Paddeln 3 ausgerüstet sind, sondern alternativ oder zusätzlich zu ihnen auch noch Versalbungswerkzeuge aufweisen, wie sie für Conchen typisch sind. Dies ermöglicht nämlich die Aufarbeitung von Feststoffen, wie Nüssen gleichzeitig mit dem Conchieren in einem einzigen Arbeitsvorgang.

Es versteht sich, dass im Rahmen der Erfindung zahlreiche Varianten möglich sind; beispielsweise können mehrere solcher Förderwendeln 8, 9 über den Umfang und/oder axial über den Trog 5 verteilt sein. Auch müssen die Messerkörper 8a, 8b nicht unbedingt zylindrisch sein, vielmehr wäre es auch denkbar, sie sich konisch gegen die Welle 2 zu verjüngend, z.B. zapfenförmig, auszubilden. Der Trog 5 seinerseits mag gegebenenfalls in mehrere Abteile unterteilt sein, wie dies von der Anmelderin bereits vorgeschlagen worden ist. Auch die Bearbeitungswerkzeuge 3 können verschieden ausgebildet sein. Der Trog 5 braucht nicht exakt horizontal ausgerichtet zu sein, obwohl dies bevorzugt ist; eine leichte Neigung in einer axialen Richtung wäre besonders dann denkbar, wenn statt eines Chargenbetriebes ein kontinuierlicher Betrieb angestrebt wird. Ebenso wäre eine senkrechte Anordnung der Mischerwellen denkbar. In jedem Falle können die Mischerwellen beidseitig oder auch nur einseitig gelagert sein, beispielsweise an einem portalartigen, über dem vertikalen Mischertrog stehenden Aufbau.

Eine besondere Anwendung der erfindungsgemässen Vorrichtung hat sich überraschend für die Herstellung von Crumb ergeben. Versuche haben nämlich gezeigt, dass die Anwendung von Scherkräften unter gleichzeitiger Erzeugung einer inneren Umlaufbewegung im Trog in radialer und vorzugsweise auch axialer, Richtung, wie sie oben geschildert wurde und für die erfindungsgemässe Vorrichtung typisch ist, dazu führt, dass der Verbrauch an teurer Kakaobutter, der bei Crumb üblicherweise sehr hoch ist, deutlich reduziert werden kann. Gleichzeitig geht damit auch eine Verfeinerung der geschmacklichen Qualitäten einher, wie festgestellt werden konnte. Dies ist in der Tat überraschend und zunächst nicht ohne weiteres erklärbar. Die Erfinder wollen sich bei einer Erklärung nicht auf eine Theorie festlegen lassen, doch könnte der Effekt dadurch erklärbar sein, dass durch die erzielte gute Vermischung bei gleichzeitiger Aufbringung von Scherkräften eine stärkere Aufschliessung der Schokoladebestandteile und insbesondere der Kakaopartikel derart erfolgt, dass aus diesen mehr Kakaobutter austritt und in die Masse übergeht, so dass die Zugabe zusätzlicher Kakaobutter um dieses Ausmass verringert werden kann. Eine andere Erklärung kann im Versalbungseffekt gefunden werden, der mit den durch die oben erläuterte Mischbewegung vergleichmässigten Scherkräften verbunden ist; denn der bei den Versuchen hergestellte Crumb war durch Crumbpartikel gekennzeichnet, die einen weichen Fettüberzug besassen und damit einen besonders feinen Geschmack ergaben. Vielleicht aber spielen beide Effekte zusammen eine Rolle. Jedenfalls liegt in dem oben skizzierten Verfahren zur Herstellung von Crumb unter Anwendung von Scherkräften und gleichzeitiger Erzeugung einer inneren Umlaufbewegung im Trog in radialer, und vorzugsweise auch axialer, Richtung ein wichtiger, gesondert zu betrachtender Aspekt der vorliegenden Erfindung.

## Patentansprüche

1. Vorrichtung zum Bearbeiten von Schokolademassen in einem eine wenigstens teilweise zylindrische Innenwand (4) aufweisenden Trog (5), in dem wenigstens eine konzentrisch zu den Zylinderwänden (4) verlaufende Bearbeitungswelle (1 bzw. 2) mit radial abstehenden, z.B. als Versalbungswerkzeuge ausgebildeten, Bearbeitungswerkzeugen (3) vorgesehen ist, **dadurch gekennzeichnet**, daß zusätzlich zur Bearbeitungswelle (1, 2) zumindest eine Förderwendel (8, 9) quer zur Bearbeitungswelle (1, 2) innerhalb des Troges (5) angeordnet und durch eine Antriebseinrichtung (7) im Sinne einer von der Trogwand (4) weg fördernden Bewegung antreibbar ist.

2. Vorrichtung nach Anspruch 1, dadurch gekennzeichnet, daß die Förderwendel (8, 9) mit mindestens einer Schneide (9) versehen ist, und daß die Schneide (9) vorzugsweise selbst die Förderwendel bildet.

3. Vorrichtung nach Anspruch 2, dadurch gekennzeichnet, daß die Schneiden (9) sektorartig sich nur über einen Teil des Umfanges erstrecken und so radial verlaufende Kanten (16) bilden (Fig. 3), und daß vorzugsweise wenigstens ein Teil der radial verlaufenden Kanten (16) - gesehen in Draufsicht - unter einem spitzen Winkel verlaufen und so als Schneidkanten ausgebildet sind.

4. Vorrichtung nach einem der vorhergehenden Ansprüche, dadurch gekennzeichnet, daß die Förderwendel (8, 9) aus mehreren einander ergänzenden Schneckenelementen (8a, 8b) zusammengesetzt ist.

5. Vorrichtung nach einem der vorhergehenden Ansprüche, dadurch gekennzeichnet, daß die Bearbeitungswerkzeuge (3) als Paddel mit gegen die Förderwendel offenen Durchbrüchen (6) ausgebildet sind.

6. Vorrichtung nach einem der vorhergehenden Ansprüche, dadurch gekennzeichnet, daß die Förderwendel (8, 9) mit einer eine Aufwärtsbewegung erzeugenden Achse angeordnet ist, wobei vorzugsweise der jeweilige Antrieb (7) in dem von der, insbesondere zylindrischen, Außenwand des Troges (5) gebildeten Zwickel untergebracht ist.

7. Messer für eine Vorrichtung nach einem der Ansprüche 2 bis 6, welches mehrere Schneiden (9) aufweist, die zusammen eine Förderwendel bilden, wobei gegebenenfalls die Förderwendel (8, 9) aus mehreren einander ergänzenden Schneckenelementen (8a, 8b) zusammengesetzt ist, und die sich sektorartig, aber schraubenlinienförmig jeweils nur über einen Teil des Umfanges erstrecken und dabei radial verlaufende Kanten (16) bilden (Fig. 3).

8. Messer nach Anspruch 7, dadurch gekennzeichnet, daß wenigstens ein Teil der radial verlaufenden Kanten (16) - gesehen in Draufsicht - unter einem spitzen Winkel verlaufen und so als zusätzliche Schneidkanten ausgebildet sind.

9. Verfahren zur Herstellung von Crumb, dessen Bestandteile mindestens zum Teil einem Mischvorgang unterzogen werden, **dadurch gekennzeichnet**, daß es mit einer Vorrichtung nach einem der vorhergehenden Ansprüche durchgeführt wird, wobei die Bestandteile des Crumb mindestens zum Teil unter Anwendung von Scherkräften und gleichzeitiger Erzeugung einer inneren Umlaufbewegung in einem Trog in radialer, und vorzugsweise auch axialer, Richtung desselben gemischt werden.

## Claims

1. Apparatus for working chocolate masses in a vat (5) having an inside wall (4) which is at least partly cylindrical, there being provided in said vat (5) at least one processing shaft (1 and/or 2) which extends concentrically to the cylinder walls (4) and has radially protruding processing tools (3), for example in the form of salvatation tools, **characterised in that** in addition to the processing shaft (1, 2) there is arranged inside the vat (5) at least one spiral conveyor (8, 9), at right angles to the processing shaft (1, 2) and adapted to be driven by a drive mechanism (7) in a direction which conveys material away from the vat wall (4).

2. Apparatus according to claim 1, characterised in that the spiral conveyor (8, 9) is provided with at least one bezel (9) and that the bezel (9) preferably itself forms the spiral conveyor.

3. Apparatus according to claim 2, characterised in that sector-like the bezels (9) extend over only part of the circumference and so form radial edges (16) (Fig. 3), and that preferably at least some of the radial edges (16) - when seen from above - extend at an acute angle and so are configured as cutting edges.

4. Apparatus according to any of the preceding claims, characterised in that the spiral conveyor (8, 9) is assembled together from a plurality of screw elements (8a, 8b) which complement one another.

5. Apparatus according to any of the preceding claims, characterised in that the processing tools (3) are in the form of paddles incorporating passages (6) which are open towards the spiral conveyor.

6. Apparatus according to any of the preceding claims, characterised in that the spiral conveyor (8, 9) is disposed with an axis that generates an upward movement, the respective drive unit (7) preferably being accommodated in the spandrel formed by the outside wall of the vat (5), more particularly by the cylindrical outside wall thereof.

7. Blade for apparatus according to any of claims 2 to 6, featuring a plurality of bezels (9) which together form a spiral conveyor, if appropriate the spiral conveyor (8, 9) being assembled together from a plurality of screw elements (8a, 8b) which complement one another, and which extend sector-like, but in a helical line, in each case over only part of the circumference so as to form radial edges (16) (Fig. 3).

8. Blade according to claim 7, characterised in that at least some of the radial edges (16) - when seen from above - extend at an acute angle and so are configured as extra cutting edges.

9. Method for making crumb, the constituents of which at least in part undergo a mixing operation, **characterised in that** it is carried out using apparatus according to any of the preceding claims, the constituents of the crumb being mixed at least in part by applying shear forces and simultaneously generating an internal circulating motion in a vat in a radial, and preferably also axial, direction thereof.

## Revendications

1. Dispositif pour travailler du chocolat en pâte dans une cuve (5) qui comporte une paroi intérieure (4) au moins partiellement cylindrique et dans laquelle est prévu au moins un arbre de travail (1 ou 2) concentrique aux parois (4) cylindriques et comportant des outils de travail (3) saillants radialement, par exemple conformés en outils de travail de pâte, caractérisé en ce qu'en plus de l'arbre de travail (1, 2), au moins une hélice transporteuse (8, 9) est disposée à l'intérieur de la cuve (5) perpendiculairement à l'arbre de travail (1, 2) et peut être entraînée par un dispositif d'entraînement (7) dans le sens d'un mouvement de transport allant en s'éloignant de la paroi (4) de la cuve.

2. Dispositif selon la revendication 1, caractérisé en ce que l'hélice transporteuse (8, 9) est pourvue d'au moins un tranchant (9) et en ce que le tranchant (9) forme de préférence lui-même l'hélice transporteuse.

3. Dispositif selon la revendication 2, caractérisé en ce que les tranchants (9) sont en forme de secteurs et ne s'étendent que sur une partie de la circonférence et forment ainsi des arêtes (16) orientées radialement (figure 3) et en ce que de préférence au moins une partie des arêtes (16) orientées radialement sont disposées de manière à former un angle aigu - en vue en plan - et sont ainsi conformées en arêtes de coupe.

4. Dispositif selon l'une des revendications précédentes, caractérisé en ce que l'hélice transporteuse (8, 9) se compose de plusieurs éléments de vis sans fin (8a, 8b) qui se complètent.

5. Dispositif selon l'une des revendications précédentes, caractérisé en ce que les outils de travail (3) sont conformés en palettes comportant des trous (6) ouverts vers l'hélice transporteuse.

6. Dispositif selon l'une des revendications précédentes, caractérisé en ce que l'hélice transporteuse (8, 9) est disposée avec un axe engendrant un mouvement ascendant, chaque entraînement (7) étant de préférence logé dans le coin formé par la paroi extérieure, en particulier cylindrique, de la cuve (5).

7. Lame destinée à un dispositif selon l'une des revendications 2 à 6, qui comporte plusieurs tranchants (9) formant ensemble une hélice transporteuse, l'hélice transporteuse (8, 9) se composant éventuellement de plusieurs éléments de vis sans fin (8a, 8b) qui se complètent entre eux et qui sont en forme de secteurs, mais s'étendent chacun en hélice seulement sur une partie de la circonférence et forment ainsi des arêtes (16) orientées radialement (figure 3).

8. Lame selon la revendication 7, caractérisée en ce qu'au moins une partie des arêtes (16) orientées radialement sont orientées de manière à former - vues en plan - un angle aigu et ainsi sont conformées en arêtes de coupe additionnelles.

9. Procédé de réalisation de crumb, dont les constituants sont soumis au moins en partie à un processus de mélange, caractérisé en ce qu'il est mis en oeuvre avec un dispositif selon l'une des revendications précédentes, les constituants du crumb étant mélangés au moins en partie à l'aide de forces de cisaillement et d'une génération simultanée d'un mouvement interne de circulation dans une cuve en direction radiale et, de préférence, aussi axiale.
